# EUROPÄISCHE PATENTANMELDUNG

(11) **EP 2 402 902 A1**
(43) Veröffentlichungstag der Anmeldung: **04.01.2012**
(21) Anmeldenummer: 10006823.8
(22) Anmeldetag: 01.07.2010
(51) Int. Cl.: G06Q 50/00, G06Q 10/00

(54) **Verfahren und Vorrichtung für das Last- und Erzeugungsmanagement in einem elektrischen Energiesystem**

(71) Anmelder: Karlsruher Institut für Technologie, 76131 Karlsruhe (DE)
(72) Erfinder: Kamper, Andreas, 76185 Karlsruhe (DE)
(74) Vertreter: Lemcke, Brommer & Partner

(57) **Zusammenfassung**

Vorgeschlagen wird ein Verfahren zum Last- und Erzeugungsmanagement in einem elektrischen Energiesystem, zu welchem Systemteilnehmer (3.1-3.8, 4; 3', 4', 3", 4") in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems zu verändern. Das Verfahren zeichnet sich dadurch aus, dass
- für ein dezentrales Last- und Erzeugungsmanagement wenigstens eine Gruppe (EG; EG1-EG3) von Systemteilnehmern (3', 4') innerhalb des Energiesystems gebildet wird,
- zunächst nur Mitglieder der Gruppe durch Ausnutzung ihrer eigenen Änderungspotenziale soweit möglich eine vorgegebene Änderung des Last- und Erzeugungszustands des Energiesystems bewirken, und
- anschließend eine ggf. noch erforderliche Reständerung des Last- und Erzeugungszustands des Energiesystems zum Erreichen der vorgegebenen Änderung des Last- und Erzeugungszustands des Energiesystems durch Ausnutzung der Änderungspotenziale einer Anzahl weiterer Systemteilnehmer (3", 4") außerhalb der Gruppe bewirkt wird.

Mit diesem grundlegenden Konzept zum dezentralen Lastmanagement kann das Last- und Erzeugungsverhalten der Systemteilnehmer ohne zentrale Infrastruktur präzise beeinflusst werden.

## Beschreibung

Die vorliegende Erfindung ist auf dem technischen Gebiet der Steuerungstechnik, Energiewirtschaft und Informatik angesiedelt und betrifft ein Verfahren gemäß dem Oberbegriff des Patentanspruchs 1 zum Last- und Erzeugungsmanagement in einem elektrischen Energiesystem, zu welchem Systemteilnehmer in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems zu verändern.

Weiterhin betrifft die Erfindung eine Vorrichtung gemäß dem Oberbegriff des Patentanspruchs 15 für das Last- und Erzeugungsmanagement in einem elektrischen Energiesystem, zu welchem Systemteilnehmer in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems zu verändern.

Der Erfindung liegt folgendes technisches Problem zugrunde: Elektrizität kann im Gegensatz zu anderen Energieträger, wie beispielsweise Gas, nicht effizient gespeichert werden. Abweichungen zwischen Erzeugung und Verbrauch im E-lektrizitätssystem müssen sofort ausgeglichen werden und sind in sehr vielen Fällen mit hohen Kosten verbunden. Auftretende Abweichungen werden durch vorgehaltene Kraftwerke ausgeglichen. Diese Kraftwerke werden zentral durch die Betreiber gesteuert. Lastmanagement soll in diesem Kontext Abweichungen minimieren und damit verbundene Kosten senken.

Aus dem Stand der Technik sind verschiedene Methoden zum Last- und Erzeugungsmanagement bekannt, beispielsweise virtuelle Kraftwerke, virtuelle Regelkraftwerke mit zentraler Steuerung sowie Strompreissignale. Die erstgenannten Lösungsansätze (Regelkraftwerke und virtuelle Regelkraftwerke) sind in der Lage, das angesprochene technische Problem durch eine zentrale Steuerung und zusätzliche Ressourcen (Kraftwerke bzw. Erzeugungskapazitäten) zu lösen. Es werden dabei zusätzliche Erzeugungsanlagen oder Verbraucher sowie eine Infrastruktur für die Steuerung benötigt. Mit Strompreissignalen kann zwar das Last- und Erzeugungsverhalten beeinflusst werden, es ist dabei jedoch nicht möglich, die Auswirkungen und ihre Dauer präzise vorherzusagen. Besonders für den Ausgleich von kurzfristigen Abweichungen ist dies aber essenziell.

Bisher existieren keine Konzepte, wie dezentrale Stromverbraucher und Stromerzeuger (z. B. in Privathaushalten) ohne zentrale Infrastruktur präzise in ihrer Energienutzung gesteuert werden können. Eine präzise Steuerung der Stromverbraucher und Erzeuger ist aber eine entscheidende Voraussetzung in Szenarien zur deutlichen Verringerung der Kosten für das Energiesystem. Zentrale Lösungen sind nämlich aufgrund der großen Anzahl an Stromverbrauchern, Stromerzeugern und des hohen Kommunikationsaufwandes nur schwer zu realisieren. Da die Daten der einzelnen Stromverbraucher und Stromerzeuger dabei zentral verwaltet werden müssten, ergeben sich zusätzlich auch datenschutzrechtliche Probleme.

Aus einer Veröffentlichung von Kamper und Eßer, "Strategies for decentralised balancing power", In: Lewis, A.; Mostaghim, S.; Randall, M, Biologically-inspired Optimisation Methods - Parallel Algorithms, Systems and Applications, Pages 261-289. Springer, Heidelberg (2009), welche hiermit durch Bezugnahme in die vorliegende Beschreibung aufgenommen wird, ist folgender Ansatz bekannt:

Eine Vielzahl von Stromverbrauchern und Stromerzeugern - nachfolgend auch als Geräte oder dezentrale Anlagen bezeichnet - werden über das Internet zu einem Pool zusammengeschlossen. In diesem Pool organisieren sich die Verbraucher und Erzeuger so, dass immer ein ausgeglichenes Lastprofil entsteht. Die Geräte im Pool können aber auch dazu animiert werden, ein Ungleichgewicht explizit herbeizuführen. Die Verbraucher und Erzeuger verfügen dazu über virtuelle Nachbarn, mit denen sie Nachrichten austauschen können. Virtuelle Nachbarschaften sind von geografischen Nachbarschaften unabhängig, solange sie sich im gleichen organisatorischen Netzsegment des elektrischen Energiesystems (Bilanzkreis) befinden. Geräte, beispielsweise Kühlschränke oder Waschmaschinen, und dezentrale Anlagen, beispielsweise Blockheizkraftwerke, werden im folgenden als Teilnehmer (am Pool) bezeichnet und nicht weiter unterschieden, da ihr Verhalten identisch ist.

Wenn ein Teilnehmer aufgrund seines internen Zustandes erkennt, dass in der nächsten Zeit Strom erzeugt oder verbraucht werden muss, fragt er bei seinen Nachbarn nach, ob es andere Teilnehmer gibt, die den Verbrauch decken können. Dabei wird unter Deckung die entgegengesetzte Energienutzung verstanden. Wenn ein Teilnehmer für eine gewisse Zeit den Verbrauch um 100 W erhöht, kann in dieser Zeit entweder ein anderer Teilnehmer 100 W mehr Leistung erzeugen, oder der Verbrauch kann anderweitig um 100 W gesenkt werden. Durch dieses Vorgehen ändert sich die Gesamtenergiebilanz nicht. Je nach Leistung und Dauer der nachgefragten Last kann es vorkommen, dass diese Leistung nicht durch einen einzelnen Teilnehmer abgedeckt werden kann. In einem solchen Fall muss eine Kombination aus mehreren Teilnehmern gefunden werden. Der Teilnehmer, der Energie nutzen möchte, fragt dazu bei einer Auswahl seiner Nachbarn nach deren Freiheitsgraden für den Zeitraum, in dem der eigene Stromverbrauch erwartet wird. Die Nachbarn senden Informationen über die vorhandenen Freiheitsgrade zurück.

Unter dem Begriff "Freiheitsgrade" wird im Rahmen der vorliegenden Beschreibung ein jeweiliges Änderungspotenzial des Stromverbrauchszustands oder Stromerzeugungszustands eines Teilnehmers verstanden. Ein verfügbarer Freiheitsgrad gibt also an, dass der betreffende Teilnehmer in der Lage ist, seinen Stromverbrauch bzw. seine Stromerzeugung zu einem gegebenen Zeitpunkt um ein bestimmtes Maß zu verändern, wobei das genannte Maß vorzugsweise Bestandteil der gesendeten Informationen ist. Im Folgenden werden die Begriffe "Freiheitsgrad" und "Änderungspotenzial" synonym verwendet und schließen die jeweiligen geräte- und anlagenspezifischen Restriktionen mit ein. Derartige Restriktionen können eine minimale ununterbrochene Betriebsdauer, eine vorgegebene Betriebszeit oder dergleichen umfassen.

Ausgehend von den Freiheitsgradbeschreibungen muss der Teilnehmer dann eine Kombination von Änderungspotenzialen auswählen, die seinen Verbrauch möglichst gut ausgleicht. Diese ausgewählten Laständerungen werden an die Nachbarn zurückgemeldet, welche entsprechend ihre eigenen Pläne betreffend den zukünftigen Stromverbrauch bzw. die zukünftige Stromerzeugung anpassen. Der Pool kann nicht nur für den Ausgleich der eigenen Energienutzung eingesetzt werden, sondern auch externe Ungleichgewichte beseitigen. Dazu müsste der zentrale Betreiber (z. B. der Bilanzkreisverantwortliche) Geräte des Pools bitten, dieses Ungleichgewicht auszugleichen. Der Betreiber muss dafür zentrale Komponenten bereithalten und die Koordination selbst durchführen, was steuerungstechnisch aufwändig ist und entsprechende Kostennachteile mit sich bringt.

Der Erfindung liegt die Aufgabe zugrunde, ein Verfahren der eingangs definierten Art und eine zur praktischen Umsetzung des Verfahrens geeignete Vorrichtung derart weiterzuentwickeln, dass dezentrale Stromverbraucher und Stromerzeuger (z. B. in Privathaushalten) ohne zentrale Infrastruktur präzise in ihrer Energienutzung gesteuert werden können, um entsprechende steuerungstechnische und kostenmäßige Vorteile zu erreichen.

Die Aufgabe wird erfindungsgemäß gelöst durch ein Verfahren mit den Merkmalen des Anspruchs 1 und durch eine Vorrichtung mit den Merkmalen des Anspruchs 15. Vorteilhafte Weiterbildungen der Erfindung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist ein Verfahren zum Last- und Erzeugungsmanagement in einem elektrischen Energiesystem, zu welchem Systemteilnehmer in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems zu verändern, dadurch gekennzeichnet, dass
- für ein dezentrales Last- und Erzeugungsmanagement wenigstens eine Gruppe von Systemteilnehmern innerhalb des Energiesystems gebildet wird,
- zunächst nur Mitglieder der Gruppe durch Ausnutzung ihrer eigenen Änderungspotenziale soweit möglich eine vorgegebene Änderung des Last- und Erzeugungszustands des Energiesystems bewirken, und
- anschließend eine ggf. noch erforderliche Reständerung des Last- und Erzeugungszustands des Energiesystems zum Erreichen der vorgegebenen Änderung des Last- und Erzeugungszustands des Energiesystems durch Ausnutzung der Änderungspotenziale einer Anzahl weiterer Systemteilnehmer außerhalb der Gruppe bewirkt wird.

Erfindungsgemäß ist eine Vorrichtung für das Last- und Erzeugungsmanagement in einem elektrischen Energiesystem, zu welchem Systemteilnehmer in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems gemäß dem erfindungsgemäßen Verfahren zu verändern, dadurch gekennzeichnet, dass
- die Systemteilnehmer selbst oder durch zusätzliche Steuerungskomponenten untereinander über ein Rechnernetz, vorzugsweise das Internet, kommunikationstechnisch verbunden sind,
- eine Anzahl von Systemteilnehmern jeweils über einen Router, vorzugsweise einen WLAN-Router oder einen Router in Verbindung mit einem Powerline-Kommunikationsnetz, an das Rechnernetz angeschlossen ist, und
- die Systemteilnehmer selbst, die genannten Router oder die zusätzlichen Steuerungskomponenten zur Durchführung des Verfahrens eingerichtet sind, vorzugsweise durch Installation einer hierfür erforderlichen Software.

Ein Grundgedanke der vorliegenden Erfindung lässt sich somit folgendermaßen formulieren: Aus dem Pool, d.h. der Masse der Systemteilnehmer wird eine Anzahl an Geräten ausgewählt, welche eine sog. "Elitäre Gruppe" bilden, nachfolgend bzw. in den Ansprüchen verkürzt auch als "Gruppe" bezeichnet. Diese Gruppe übernimmt die dezentrale Steuerung der anderen Geräte. Im Zuge einer Weiterbildung dieser Idee werden nur Geräte in die Elitäre Gruppe aufgenommen, die in der Lage sind, ihre Energienutzung unverzüglich zu verändern, die also über sofort realisierbare Änderungspotenziale verfügen. Ist ein Verbraucher oder Erzeuger (Systemteilnehmer) dazu nicht mehr in der Lage, wird er im Zuge einer anderen Weiterbildung dieser Idee automatisch durch einen anderen Verbraucher oder Erzeuger ersetzt. Tritt ein Ungleichgewicht zwischen Erzeugung und Verbrauch auf, so versucht die Elitäre Gruppe, dieses durch Leistungsänderungen der eigenen Teilnehmer (Gruppenmitglieder) zu reduzieren. Reichen die hierzu vorhandenen Kapazitäten nicht aus, kann der Pool, d.h. diejenigen Geräte bzw. Anlagen außerhalb der Elitären Gruppe mit dem Ausgleich der verbleibenden Leistung beauftragt werden.

Der Begriff "Systemteilnehmer" bezeichnet nach dem Sprachgebrauch der vorliegenden Beschreibung einen steuerbaren Stromverbraucher oder Stromerzeuger in seiner Gesamtheit und im Falle der größtmöglichen Verallgemeinerung sogar lediglich eine entsprechende Steuerungskomponente, die einen oder mehrere Stromverbraucher und/oder Stromerzeuger in ihrem Last- bzw. Erzeugungsverhalten steuern kann. Die genannte Steuerungskomponente kann von den zugehörigen Verbrauchern/Erzeugern Zustands- und Prognoseinformationen bezüglich Last und Erzeugung erhalten, kann diese Werte für die Zukunft berechnen oder schätzen und kann zusätzlich Algorithmen ausführen, welche durch Einwirken auf die Verbraucher/Erzeuger zumindest die weiter oben genannten erfindungsgemäßen Verfahrensschritte verwirklichen. Dabei ist es unerheblich, ob die genannte Steuerungskomponente im Gerät selbst, in einer separaten Steuerbox oder dem erwähnten Router angeordnet ist und/oder ggf. aufgeteilt wird (beispielsweise Prognose im Gerät, Algorithmen auf dem Router). Das Verfahren kann somit grundsätzlich auch mit Geräten verwirklicht werden, die an sich nicht über die erforderliche Steuerungsintelligenz verfügen, sofern zusätzlich die genannten Steuerungskomponenten vorgesehen sind.

Die Verwendung von Routern ist in diesem Zusammenhang deshalb bevorzugt, weil diese ohnehin benötigt werden, um das Rechnernetz aufzubauen.

Alle Mitglieder der Elitären Gruppe können untereinander kommunizieren und sind dementsprechend kommunikationstechnisch verbunden, vorzugsweise über das Internet. Im Gegensatz zu den anderen (System-)Teilnehmern im Pool dürfen im Zuge einer wieder anderen Weiterentwicklung der Grundidee der Erfindung nur die Mitglieder der Elitären Gruppe ihre Leistung verändern, ohne sich mit anderen Teilnehmern abzustimmen.

Eine andere Weiterbildung des erfindungsgemäßen Verfahrens sieht vor, dass die Mitglieder der Gruppe steuerungstechnisch in wenigstens einer Liste angeordnet werden, welche sukzessive zum Bewirken der vorgegebenen Änderung des Last- und Erzeugungszustands des Energiesystems abgearbeitet wird, wobei vorzugsweise Systemteilnehmer mit Änderungspotenzialen zur Senkung des Stromverbrauchs an einem ersten Ende der Liste und Systemteilnehmer mit Änderungspotenzialen zur Senkung der Stromerzeugung an einem zweiten Ende der Liste angeordnet sind, und wobei die Liste in Abhängigkeit von der Änderungsvorgabe von dem ersten Ende oder von dem zweiten Ende her abgearbeitet wird.

In diesem Zusammenhang sei darauf hingewiesen, dass die Gruppe bzw. die Liste zwei Bereiche umfassen kann, wobei grundsätzlich natürlich auch die Erzeugung zweier entsprechender Listen möglich ist: ein erster Bereich bzw. eine erste Liste umfasst solche Geräte und Anlagen, die ihren Verbrauch erhöhen oder die Erzeugung reduzieren können. Diese sind für den Ausgleich positiver Abweichungen zuständig (d.h. mehr Erzeugung als Verbrauch). Ein zweiter Bereich bzw. eine zweite Liste umfasst solche Geräte und Anlagen, die ihren Verbrauch reduzieren oder die Erzeugung erhöhen können. Diese sind für den Ausgleich negativer Abweichungen zuständig. Durch die weiter oben beschriebene Anordnung ist ein effizientes Durchsuchen der Gruppe bzw. Liste(n) bei einer bekannten Art der Abweichung möglich.

Es sei in diesem Zusammenhang angemerkt, dass im Rahmen der Erfindung die Betrachtung von Last- oder Erzeugungszuständen weniger wichtig ist als die Planung von Aktionen in der Zukunft (Last- oder Erzeugungsänderungen). Auch geht es weniger um einen absoluten Zustand (Haushalt verbraucht 10,2 kW), sondern um das Potenzial einer Änderung (± 5k W) - unabhängig davon, wie hoch die Gesamtleistung ist.

Die Gruppenmitglieder kündigen vorzugsweise anderen Mitgliedern eine Laständerung in der Zukunft an. Die anderen Mitglieder können diese Information für die eigene Entscheidung nutzen. Erst nach Ablauf einer gewissen Zeit, beispielsweise einer Minute, wird sich zeigen, ob die entsprechende Aktion erfolgreich war. Es handelt sich also um eine Art Regelkreis: Änderungsbedarf ermitteln, zukünftige Änderungen innerhalb der Gruppe kommunizieren, u.s.w.

Die Mitglieder der Elitären Gruppe sind vorzugsweise die einzigen Systemteilnehmer (Teilnehmer im Pool), die über das aktuelle Ungleichgewicht im Bilanzkreis oder einer übergeordneten Regelzone des Energiesystems informiert werden, beispielsweise durch den betreffenden Bilanzkreis- oder Regelzonenverantwortlichen. Sobald eine Abweichung (unabhängig ob intern im Pool oder extern im Bilanzkreis bzw. in der Regelzone) erkannt wird, überprüfen alle Mitglieder der Elitären Gruppe, ob sie die Abweichung reduzieren können. Die Mitglieder der Elitären Gruppe können im Rahmen der weiter oben erläuterten Listenanordnung durchnummeriert sein, und bei einem positiven Ungleichgewicht beginnt beispielsweise das Mitglied mit der niedrigsten Nummer, wenn möglich, die Abweichung zu reduzieren. Es kann anschließend die Daten seiner Leistungsänderung den anderen Mitgliedern der Gruppe, zumindest jedoch einem weiteren Gruppenmitglied zur Verfügung stellen. Bei negativen Ungleichgewichten würde entsprechend mit der höchsten Nummer, d.h. am anderen Ende der Liste mit der Anpassung begonnen. Dieser Vorgang wird vorzugsweise der Reihe nach von allen Mitgliedern der Gruppe durchgeführt.

Dieser Sachverhalten lässt sich auch derart formulieren, dass die Mitglieder der Gruppe einzeln nacheinander versuchen, durch Ausnutzung ihrer eigenen Änderungspotenziale soweit möglich eine vorgegebene Änderung des Last- und Erzeugungszustands des Energiesystems bewirken, wobei vorzugsweise die Mitglieder der Gruppe ihren jeweiligen geplanten Änderungen untereinander kommunizieren und diese anschließend gemeinsam realisieren.

Eine andere Weiterbildung des erfindungsgemäßen Verfahrens beinhaltet, dass eine Änderung des Last- und Erzeugungszustands des Energiesystems über die vorgegebene Änderung des Last- und Erzeugungszustands des Energiesystems hinaus vermieden wird, dass also insbesondere Gruppenmitglieder niemals eine Last- oder Erzeugungsänderung überkompensieren.

Um eine Sättigung bzw. ein Sich-Aufschaukeln des Systems durch sukzessive Inbetriebnahme sämtlicher Teilnehmer zu verhindern, sieht eine besonders vorteilhafte Weiterbildung des erfindungsgemäßen Verfahren vor, dass in die Gruppe bevorzugt solche Systemteilnehmer aufgenommen werden, deren Änderungspotenziale eine Verringerung des Stromverbrauchs und/oder der Stromerzeugung erlauben. Ein erhöhter Verbrauch lässt sich somit vorzugsweise durch Absenkung des Verbrauchs an anderer Stelle kompensieren - nicht durch verstärkte Erzeugung. Gleiches gilt entsprechend auch für eine überschüssige Erzeugung.

Eine wieder andere Weiterbildung des erfindungsgemäßen Verfahrens beinhaltet, dass zum Ersetzen eines ausgeschiedenen Gruppenmitglieds wenigstens ein Mitglied der Gruppe Informationen betreffend eine vorgegebene Anzahl weiterer Systemteilnehmer, welche über aktuell nutzbare Änderungspotenziale verfügen, an ein vorbestimmtes Mitglied der Gruppe sendet, welches anhand der Informationen eines neues Mitglied der Gruppe bestimmt. Die vorstehend angesprochenen "weiteren Systemteilnehmer" werden im Rahmen der vorliegenden Beschreibung auch als "Nachbarn" bezeichnet, wobei es - wie bereits erwähnt - auf eine geographische Nähe nicht ankommt.

Um eine bestimmte Reaktionszeit bei der Leistungsanpassung zu gewährleisten, was für den Systembetreiber von großer Bedeutung ist, kann im Zuge einer wieder anderen Weiterbildung des erfindungsgemäßen Verfahrens vorgesehen sein, dass in die Gruppe nur solche Systemteilnehmer aufgenommen werden oder dass nur solche Systemteilnehmer in der Gruppe verbleiben, deren aktuell nutzbare Änderungspotenziale innerhalb einer vorgegebenen Zeit, t, verfügbar sind, wobei t vorzugsweise im Sekunden- oder Minutenbereich liegt, höchst vorzugsweise zwischen mindestens 1 Minute und 15 Minuten.

Nach erfolgter Anpassung des Last- und Erzeugungszustands kann vorgesehen sein, wie bereits angesprochen, dass zum Bewirken einer noch erforderlichen Reständerung des Last- und Erzeugungszustands des Energiesystems wenigstens ein Mitglied der Gruppe eine Anzahl weiterer Systemteilnehmer außerhalb der Gruppe zur Ausnutzung ihrer jeweiligen Änderungspotenziale auffordert. Speziell kann hierbei vorgesehen sein, dass eine Mehrzahl von Mitgliedern der Gruppe jeweils eine Anzahl weiterer Systemteilnehmer außerhalb der Gruppe zur Ausnutzung ihrer jeweiligen Änderungspotenziale auffordert, wobei jedes dieser Gruppenmitglieder für das Bewirken nur eines Teils der noch erforderlichen Reständerung des Last- und Erzeugungszustands des Energiesystems verantwortlich ist. Auf diese Weise lässt sich das Verfahren unter Umständen weiter beschleunigen, da die zu kompensierenden (Teil-)Änderungen jeweils kleiner ausfallen.

Eine bevorzugte Verwendung des erfindungsgemäßen Verfahrens liegt auf der Ebene von Bilanzkreisen oder Regelzonen des elektrischen Energiesystems, wie bereits angesprochen wurde. Dabei informiert der betreffende Bilanzkreisverantwortliche (BKV) bzw. Regelzonenverantwortliche (allgemein: der Betreiber) wenigstens ein Mitglied der Gruppe über eine gewünschte Änderung des Stromverbrauchszustands oder Stromerzeugungszustands, um eine Kompensation durch die Systemteilnehmer zu bewirken.

Der Betreiber oder BKV muss dabei kein Mitglied sein (weder in der Gruppe noch im restlichen Pool). Er muss nur die gewünschte Änderung publizieren. Durch die Schaffung der Elitären Gruppe wird in diesem Zusammenhang überhaupt erst ermöglicht, dass der Betreiber selbst nicht mehr Teil des Pools ist. Durch das gezielte Vorgeben bestimmter Änderungen kann der Betreiber auf diese Weise ein bestimmtes Verhalten des Energiesystems hervorrufen, beispielsweise eine erhöhte Stromerzeugung zu Zeiten hoher Abnahmepreise, um überschüssige Leistung gewinnbringend verkaufen zu können, oder eine Reduktion des Verbrauchs, wenn zusätzliche Leistung teuer einzukaufen wäre.

Durch den vorbekannten Zusammenschluss von Geräten und Anlagen zu einem Pool konnte die Energienutzung auf eine präzise Art und Weise bislang nur zentral und mit entsprechendem Aufwand gesteuert werden. Durch die erfindungsgemäße Integration einer Elitären Gruppe wird die Koordination nunmehr in den Pool verlegt. Es ist keine zentrale Koordinierungsstelle mehr notwendig. Die Teilnehmer werden ständig selbsttätig hinsichtlich ihres Last- und Erzeugungsverhaltens aktualisiert. Damit kann je nach Leistung des Pools der Bedarf an Regel- bzw. Ausgleichsenergie ohne zusätzliche Kraftwerke oder Infrastruktur signifikant reduziert werden. Das vorgestellte Verfahren ist damit ausdrücklich kein Ersatz für das bestehende Regelenergiesystem, allerdings reduziert es die dafür notwendigen Ressourcen auf ein Minimum.

Ein wesentlicher Aspekt ist dabei das Konzept der Elitären Gruppe und der durch sie induzierten Last- und Erzeugungsänderungen. Dazu zählen - je nach Ausgestaltung des Verfahrens - die Aktualisierung der Teilnehmer, der Ausgleich von vorzugsweise kurzzeitigen Schwankungen durch kleinere Laständerungen innerhalb der Gruppe, die Nutzung des Pools für größere, länger währende Laständerungen sowie die inhärente Reduzierung der notwendigen Informationen über Art und Restriktion bzw. Freiheitsgrade der beteiligen Geräte und Anlagen (integrierter Datenschutz).

Mit den vorgestellten Konzepten zum kurzfristigen dezentralen Lastmanagement kann ohne zentrale Infrastruktur das Last- und Erzeugungsverhalten der vorhandenen Geräte und dezentralen Stromerzeugungsanlagen präzise beeinflusst werden. Der Betreiber des Geräte- und Anlagenpools erhält die Möglichkeit, die Energienutzung der Teilnehmer zu verändern, ohne die einzelnen Teilnehmer und deren Restriktionen bzw. Freiheitsgrade genau kennen zu müssen.

Die vorhandenen Freiheitsgrade in der Energienutzung von Geräten und dezentralen Anlagen können genutzt werden, um aktuelle Ungleichgewichte auszugleichen. Durch die Einführung der Elitären Gruppe kann die Koordination aller Geräte und dezentralen Erzeugungsanlagen vollständig selbstorganisierend gelöst werden. Die Elitäre Gruppe besitzt im Zuge bestimmter Ausgestaltungen der Erfindung die Fähigkeit, ihre Teilnehmer selbst zu erneuern sowie kleinere Abweichungen selbstständig auszugleichen, und sie übernimmt zusätzlich die Koordination aller beteiligten Geräte und Anlagen. Auf diese Weise kann ein Gleichgewicht zwischen Erzeugung und Verbrauch erreicht werden.

Für einen Betreiber eines Gerätepools mit Elitärer Gruppe ergeben sich unter anderem folgende Einsatzmöglichkeiten: Reduzierung des Regelleistungsbedarfs; bessere Integration von Kraftwerken, die mit fluktuierenden erneuerbaren Energien betrieben werden; kurzfristiger Kauf und Verkauf von Strom an Strombörsen. Der Betreiber muss hierbei nur wenige eigene Ressourcen bereitstellen, da der Hauptteil der notwendigen Koordination dezentral, z. B. in den Haushalten, durchgeführt wird. Die verwendeten Algorithmen benötigen nur wenige Ressourcen und können problemlos in die Geräte selbst, in einfache und kostengünstige zusätzliche Steuermodule bzw. in die vorhandene Infrastruktur (wie z. B. im Haushalt vorhandene Internet-Router) integriert werden. Die Ressourcen der Haushalte werden dabei nicht übermäßig belastet, sodass die Besitzer nicht mit Einbußen rechnen müssen.

Es wird eine kritische Anzahl von Geräten und dezentralen Erzeugungsanlagen benötigt, damit das System funktionieren kann. Eine flächendeckende Verfügbarkeit von geeigneten intelligenten Geräten und Anlagen ist derzeit noch nicht gegeben. Durch die zunehmende Automatisierung und die Verfügbarkeit von intelligenten Zählern ist aber damit zu rechnen, dass sich dies in den nächsten Jahren ändern wird.

Die nachfolgende Tabelle fasst die möglichen Einsatzgebiete der Erfindung mit den entsprechenden Nutznießern nochmals zusammen:

| **Verwendung** | **Nutznießer. Anwender** |
|---|---|
| Reduzierung des Regelenergiebedarfs bei kurzfristigen Abweichungen | Bilanzkreise, Großkunden, Energieversorger, Netzbetreiber |
| Ausgleich von Fahrplanabweichungen bei vorab bekannten Abweichungen | Energiehändler, Energieversorger, Großkunden, Netzbetreiber |
| Management von dezentralen Anlagen | Besitzer dezentraler Anlagen |
| Engpassvermeidung in Stromnetzen | Netzbetreiber |
| Lastflussoptimierung zwischen Bilanzkreisen | Netzbetreiber |

Zudem ergibt sich bei Firmen für Hausautomatisierung ein ganz neues Anwendungsgebiet für dort bereits vorhandene Produkte.

Alle Konzepte wurden durch den Erfinder in einem virtuellen Stadtteil mit bis zu 20000 Haushalten getestet und können problemlos auch auf größere Modellgebiete übertragen werden. Insgesamt wurden dabei mehr als 2500 verschiedene Szenarien und Konfigurationen mit jeweils mindestens 25 Durchgängen simuliert und analysiert.

Weitere Eigenschaften und Vorteile der Erfindung ergeben sich aus der nachfolgenden Beschreibung von nicht als Einschränkung zu verstehenden Ausführungsbeispielen anhand der Zeichnung.
- Figur 1: zeigt schematisch eine Teilansicht eines elektrischen Energiesystems mit einer erfindungsgemäßen Vorrichtung;
- Figur 2: zeigt schematisch einen Bilanzkreis eines elektrischen Energiesystems bei Verwendung des erfindungsgemäßen Verfahrens mit einer Elitären Gruppe;
- Figur 3: zeigt schematisch einen Bilanzkreis eines elektrischen Energiesystems bei Verwendung des erfindungsgemäßen Verfahrens mit mehreren Elitären Gruppen;
- Figur 4: zeigt schematisch einen erfindungsgemäßen Verfahrensablauf zum Ausgleich von externen Schwankungen mit entsprechender Kommunikation;
- Figur 5: zeigt schematisch einen erfindungsgemäßen Verfahrensablauf zur Auswahl neuer Gruppenmitglieder; und
- Figur 6: zeigt schematisch einen erfindungsgemäßen Verfahrensablauf zur Kombination von Pool und Elitärer Gruppe.

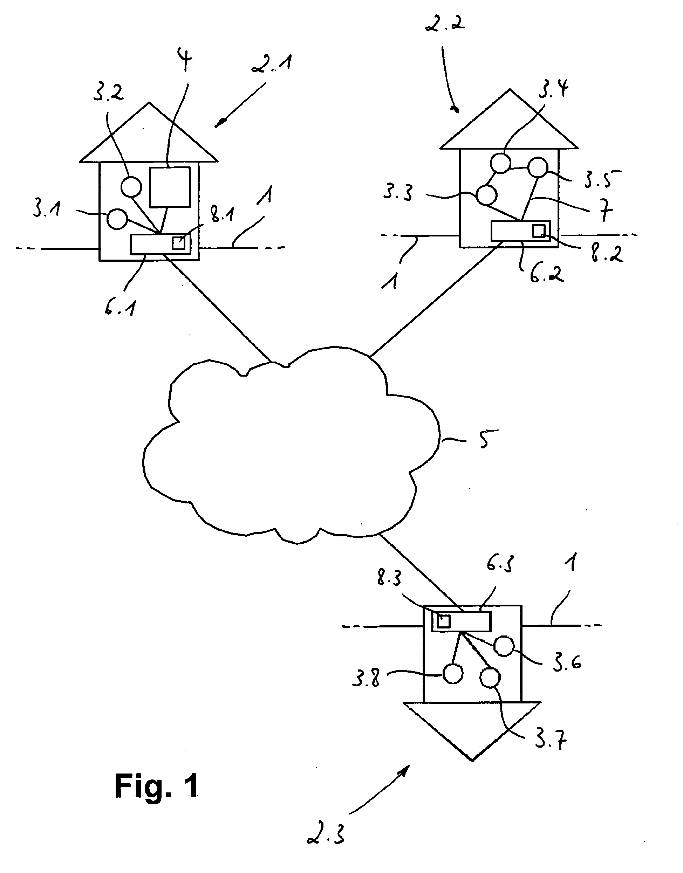

Fig. 1 zeigt schematisch eine Teilansicht eines elektrischen Energiesystems. Das elektrische Energiesystem umfasst zunächst eine Anzahl von elektrischen Versorgungsleitungen 1, über welche eine Reihe von Haushalten 2.1-2.3 mit elektrischer Energie versorgt werden, die beispielsweise aus herkömmlichen Kraftwerken und/oder erneuerbaren Energiequellen zur Verfügung gestellt wird (in Fig. 1 nicht gezeigt). Selbstverständlich ist das elektrische Energiesystem im Rahmen der vorliegenden Erfindung nicht auf ein Energiesystem zur Versorgung von (Privat-)Haushalten beschränkt, sondern kann auch andere Einrichtungen, wie Handwerks- oder Industriebetriebe, öffentliche Gebäude oder dergleichen, beinhalten. Nach dem Sprachgebrauch der vorliegenden Anmeldung sind in dem elektrischen Energiesystem eine Anzahl von Stromverbrauchern 3.1-3.8 und eine Anzahl von Stromerzeugern 4 als Systemteilnehmer leitungstechnisch zusammengeschlossen. Gemäß der Darstellung in Fig. 1 sind die genannten Stromverbraucher 3.1-3.8 und die Stromerzeuger 4 auf die einzelnen Haushalte 2.1-2.3 verteilt angeordnet, ohne dass die vorliegende Erfindung jedoch hierauf beschränkt wäre. Bei den genannten Stromverbrauchern 3.1-3.8 kann es sich beispielsweise um Waschmaschinen, Wäschetrockner, Kühlschränke; Gefrierschränke, Elektroheizungen oder dergleichen handeln. Derartige Stromverbraucher werden im Rahmen der vorliegenden Beschreibung auch als "Geräte" bezeichnet. Bei den Stromerzeugern 4 kann es sich beispielsweise um (Mini-)Blockheizkraftwerke, Gasturbinen oder dergleichen handeln. Solche Stromerzeuger werden im Rahmen der vorliegenden Beschreibung auch als "(dezentrale) Anlagen" bezeichnet. -

Da Photovoltaikanlagen nicht steuerbar sind, sind diese im Rahmen der Erfindung nur eingeschränkt verwendbar. Sie können am Pool teilnehmen und verbessern damit die Prognose und die Abweichung, können aber nicht aktiv für das Last- und Erzeugungsmanagement genutzt werden.

Die Systemteilnehmer sind über ein Rechnernetz 5 auch kommunikationstechnisch miteinander verbunden, wobei es sich bei dem Rechnernetz 5 vorzugsweise um das Internet handelt. Die Anbindung der Systemteilnehmer 3.1-3.8, 4 an das Rechnernetz 5 erfolgt über Router 6.1-6.3, wobei ohne Beschränkung der Allgemeinheit jedem Haushalt 2.1-2.3 jeweils ein Router 6.1-6.3 zugeordnet ist. Bei den Routern 6.1, 6.3 handelt es sich vorliegend um heutzutage in Haushalten regelmäßig anzutreffende Internet- oder DSL-Router, welche mit den in dem jeweiligen Haushalt 2.1, 2.3 vorhandenen Systemteilnehmern 3.1, 3.2, 4; 3.6-3.8 vorzugsweise drahtlos kommunizieren. Router 6.2 ist als Powerline-Kommunikationsnetz-Router ausgebildet und steht mit den zugehörigen Systemteilnehmern 3.3-3.5 über das haushaltsinterne Stromleitungsnetz (Powerline) 7 in kommunikationstechnischer Wirkverbindung.

Die Router 6.1-6.3 beinhalten jeweils Software 8.1-8.3, welche die zur Durchführung des erfindungsgemäßen Verfahrens benötigten Funktionalitäten bzw. Algorithmen implementiert. Aktuelle DSL-Router verfügen beispielsweise regelmäßig über die in diesem Zusammenhang benötigte Prozessorleistung. Alternativ können die zur Durchführung des erfindungsgemäßen Verfahrens benötigten Funktionalitäten bzw. Algorithmen auch durch eine zusätzliche Steuerungskomponente (nicht gezeigt) oder durch die Systemteilnehmer (Geräten und/oder Anlagen) selbst implementiert werden. Auch eine Aufteilung bzw. Teil-Implementierung ist möglich.

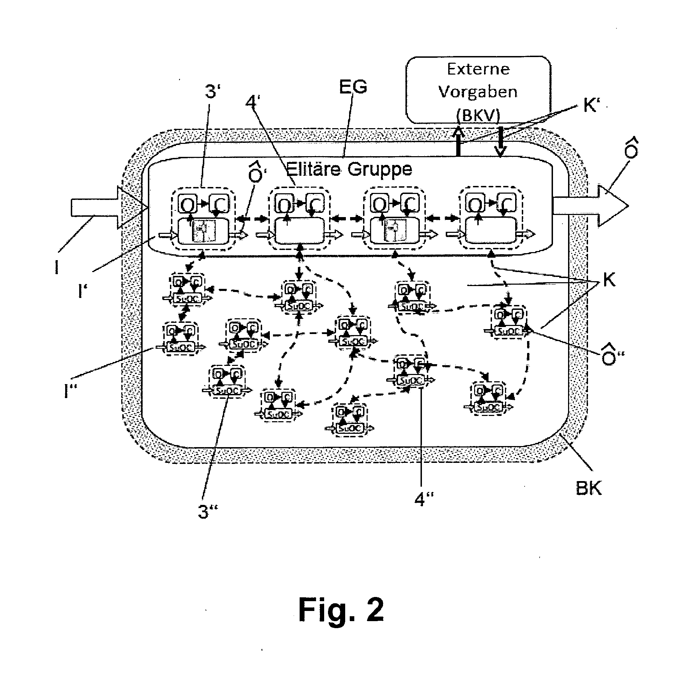

Die Systemteilnehmer 3.1-3.8, 4 müssen im Rahmen der gezeigten Ausgestaltung der vorliegenden Erfindung dazu ausgebildet bzw. eingerichtet sein, ihrem jeweils zugeordneten Router 6.1-6.3 zumindest ein aktuelles (und gegebenenfalls auch zukünftiges) Änderungspotential ihres jeweiligen Stromverbrauchs bzw. ihrer jeweiligen Stromerzeugung samt diesbezüglicher Restriktionen mitzuteilen, welches anschließend durch den Router 6.1-6.3 über das Rechnernetz 5 grundsätzlich allen weiteren Systemteilnehmern kommunizierbar ist. Hierauf wird weiter unten anhand der Fig. 2 bis 6 noch genauer eingegangen. Die genannte Mitteilung kann entweder durch die Systemteilnehmer 3.1-3.8, 4 selbst oder durch eine jeweils zugeordnete, nicht gezeigte zusätzliche Steuerungskomponente erfolgen.

Die in Fig. 1 gezeigten Systemteilnehmer 3.1-3.8, 4 können zu einem so genannten Bilanzkreis gehören bzw. in ihrer Gesamtheit einen solchen Bilanzkreis bilden, dessen gesamte elektrische Leistungsbilanz (Summe aus Verbrauch und Erzeugung) durch einen so genannten Bilanzkreisverantwortlichen (BKV) überwacht, verwaltet und betriebswirtschaftlich abgerechnet wird, wobei der BKV in der Regel daran interessiert ist, Schwankungen der Gesamtleistung in seinem Bilanzkreis auszugleichen bzw. die Gesamtleistung im Bilanzkreis gezielt zu beeinflussen.

Fig. 2 zeigt schematisch einen solchen Bilanzkreis BK, der über externe Vorgaben von einem Bilanzkreisverantwortlichen (BKV) beeinflussbar ist. Wiederum beinhaltet der Bilanzkreis (BK), d. h. das elektrische Energiesystem eine Anzahl von Systemteilnehmern 3', 3" bzw. 4', 4", wobei in Fig. 2 aus Gründen der Übersichtlichkeit nicht alle Systemteilnehmer explizit bezeichnet sind. Wie bereits in Fig. 1 steht das Bezugszeichen 3 (3', 3") für Stromverbraucher, während das Bezugszeichen 4 (4', 4") Stromerzeuger kennzeichnet. Grundsätzlich können Stromverbraucher und Stromerzeuger natürlich auch in einem einzigen Systemteilnehmer vereint sein.

Die einzelnen Systemteilnehmer 3', 3", 4', 4" sind in Fig. 2 als sogenannte O/C-Architektur dargestellt. Die Architektur besteht aus dem technischen Gerät selbst, welches als "SuOC" (System under Observation and Control) bezeichnet wird, und zusätzlich aus jeweils einem Observer und einem Controller welche das Geräte überwachen und entsprechende der Restriktionen und Vorgaben steuern (bei einem Kühlschrank wären dies der Temperatursensor und Steuerungsautomatik). Derartige Systeme sind dem Fachmann grundsätzlich bekannt, so dass hierauf an dieser Stelle nicht weiter einzugehen ist. Bezugszeichen O bezeichnet in diesem Zusammenhang jeweils den Observer, während Bezugszeichen C den Controller bezeichnet. Die Blockpfeile in Fig. 2 bezeichnen jeweils Input I, I', I" (Pfeil weist auf den jeweiligen Systemteilnehmer zu) bzw. Output Ö, Ö', Ö" (Pfeil weist vom jeweiligen Systemteilnehmer weg), im vorliegenden Falle also die verbrauchte elektrische Energie (Input) bzw. abgegebene elektrische Energie (Output). Die gestrichelten Doppelpfeile K zwischen den Systemteilnehmern symbolisieren deren Kommunikation untereinander.

Die mit den eingestrichenen Bezugszeichen 3', 4' bezeichneten Systemteilnehmer bilden erfindungsgemäß eine so genannte Elitäre Gruppe EG, deren Mitglieder in der Lage sind, ihr vorhandenes Änderungspotential innerhalb einer vorgegebenen Zeit t, die vorzugsweise im Sekunden- oder Minutenbereich liegen kann, zu aktivieren. Das bedeutet beispielsweise für den Systemteilnehmer 3', dass er seinen Verbrauch innerhalb der Zeit t um einen bestimmten Wert bis hin zu einem Maximalwert senken oder erhöhen kann, beispielsweise durch Ein-oder Ausschalten. Entsprechend gilt für den Systemteilnehmer 4' als Mitglied der Elitären Gruppe EG, dass er seine Stromerzeugung kurzfristig anpassen (steigern oder zurückfahren) kann. Die Mitglieder 3', 4' der Elitären Gruppe EG stehen untereinander in einer kettenartigen Kommunikationsverbindung. Allein die Elitäre Gruppe EG kommuniziert (Pfeile K') mit dem Bilanzkreisverantwortlichen BKV und empfängt insbesondere dessen Vorgaben zur Last- und Erzeugungsänderung. Zur Elitären Gruppe EG gehören nur solche Systemteilnehmer 3', 4', welche über aktuell nutzbare Änderungspotenziale bzw. Freiheitsgrade verfügen. Alle anderen Systemteilnehmer 3", 4", welche nicht Mitglieder der Elitären Gruppe EG sind, bilden den so genannten Pool. Sie kommunizieren untereinander und mit Mitgliedern der Elitären Gruppe EG hinsichtlich der jeweiligen Änderungspotenziale. Es findet keine Kommunikation zwischen dem Bilanzkreisverantwortlichen BKV und den Systemteilnehmern 3", 4" statt.

Zweck der Elitären Gruppe EG mit ihren kurzzeitig verfügbaren Änderungspotenzialen ist es, kleinere Schwankungen zwischen Input und Output des Bilanzkreises BK selbständig auszugleichen, ohne dass hierfür eine zentrale Steuereinheit (beim BKV) erforderlich wäre und ohne dass hierfür auf die Poolmitglieder 3", 4" zurückgegriffen werden müsste, was einen erhöhten Kommunikationsaufwand bedeuten würde. Der BKV kann solche Schwankungen durch bestimmte Vorgaben K' seinerseits auch gezielt hervorrufen, um eine bestimmte kollektive Reaktion der Systemteilnehmer 3', 4', 3", 4" zu bewirken, worauf weiter unten noch genauer eingegangen wird.

Die Zusammensetzung der Elitären Gruppe EG ist nicht statisch, sondern verändert sich mit der Zeit in Abhängigkeit von den verfügbaren Änderungspotenzialen der Systemteilnehmer. Auch hierauf wird weiter unten noch genauer eingegangen.

Die Systemteilnehmer 3", 4" im Pool werden nur dann zur Kompensation von Last- und Erzeugungsschwankungen herangezogen, wenn die Mitglieder 3', 4' der Elitären Gruppe EG dies unter Ausnutzung ihrer eigenen Freiheitsgrade nicht allein bewerkstelligen können. In diesem Falle kommuniziert wenigstens eines der Gruppenmitglieder 3', 4', vorzugsweise alle Gruppenmitglieder, gezielt mit einer Anzahl von Systemteilnehmern 3", 4" im Pool und bittet diese um Kompensation einer noch verbleibenden (Teil-)Reständerung durch Aktivieren ihrer jeweiligen Änderungspotenziale.

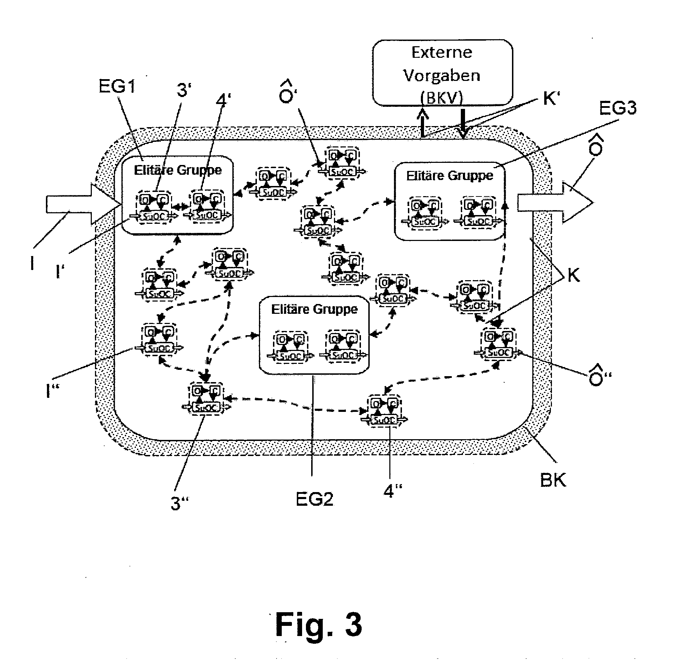

Der in Fig. 3 dargestellte Sachverhalt entspricht im Wesentlichen denjenigen aus Fig. 2 mit der Ausnahme, dass in dem Energiesystem gemäß Fig. 3 nicht nur eine Elitäre Gruppe sondern drei Elitäre Gruppen EG1-EG3 vorhanden sind. Die Elitären Gruppen EG1-EG3 agieren unabhängig voneinander, wie weiter oben anhand von Fig. 2 für die dortige Elitäre Gruppe EG beschrieben. Zu beachten ist hierbei, dass nicht ein Systemteilnehmer mehr als einer Elitären Gruppe angehören darf.

Wie bereits angesprochen, sind allein Mitglieder der Elitären Gruppen befugt, den Last- und Erzeugungszustand des Energiesystem durch Ausnutzung Ihrer Änderungspotenziale zu beeinflussen, ohne sich mit anderen Systemteilnehmern außerhalb der Gruppe abzustimmen. Eine derartige Abstimmung erfolgt nur innerhalb der Elitären Gruppen, worauf weiter unten noch genauer eingegangen wird.

Welche Systemteilnehmer zu einer gegebenen Zeit Mitglied einer Elitären Gruppe sind, wird nach Maßgabe in der Software 8.1-8.3 (vgl. Fig. 1) enthaltener Algorithmen und Funktionalitäten bestimmt und ist innerhalb des Rechnernetzes 5 bekannt.

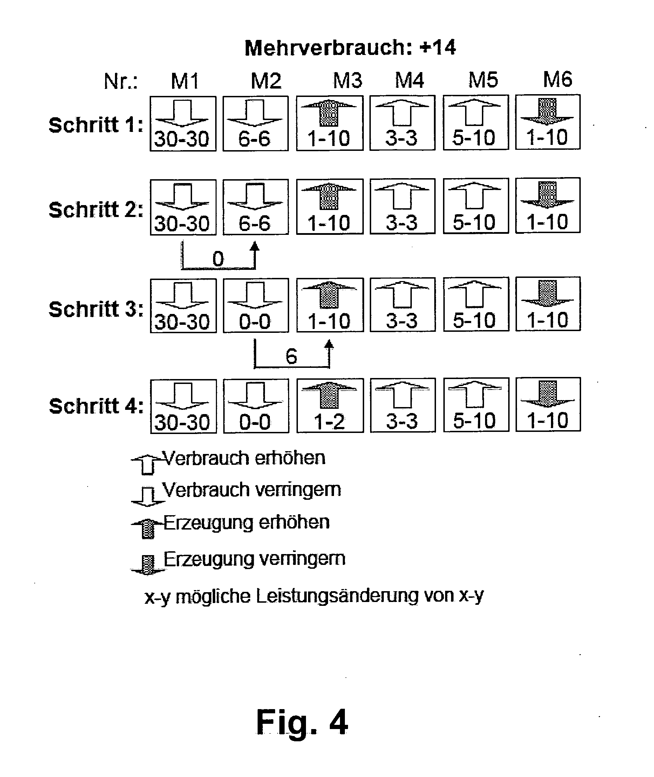

In Fig. 4 ist schematisch ein erfindungsgemäßer Verfahrensablauf zum Ausgleich von externen Schwankungen mit entsprechender Kommunikation innerhalb der Elitären Gruppe anhand eines einfachen Beispiels dargestellt. Die Elitäre Gruppe besteht aus sechs (System-)Teilnehmern oder Mitgliedern, die als M1-M6 bezeichnet sind, von denen drei Teilnehmer positive Energie (Verbrauch verringern oder Erzeugung erhöhen; siehe Legende) und drei andere Teilnehmer negative Energie (Verbrauch erhöhen oder Erzeugung verringern, siehe Legende) bereitstellen können. Die Gruppe ist so sortiert, dass Teilnehmer, die für eine Leistungsänderung Geräte oder Anlagen abschalten müssten (Pfeile nach unten), in der gezeigten Listenstruktur außen angeordnet sind, und dass Teilnehmer, die Geräte oder Anlagen in Betrieb nehmen müssten, weiter in der Mitte stehen. Bei einem Durchsuchen der Liste von außen trifft man daher immer zuerst auf Gruppenmitglieder, deren Änderungspotenzial mit einer Abschaltung verknüpft ist. Links in Fig. 4 stehen Teilnehmer, die den Verbrauch senken oder die Erzeugung erhöhen können (Teilnehmer M1-M3), und rechts Teilnehmer, die den Verbrauch erhöhen oder die Erzeugung reduzieren können (Teilnehmer M4-M6). Teilnehmer, die für eine Laständerung Geräte abschalten, sind mit einem nach unten zeigenden Pfeil dargestellt. Diese sollen nach Möglichkeit bevorzugt für den Ausgleich von Ungleichgewichten eingesetzt werden, damit keine Sättigung des Systems eintritt. Die Zahlen x-y bei den jeweiligen Pfeilen geben an, um welches Mindestmaß x W(att) bzw. um welchen maximalen Wert y W(att) der betreffende Teilnehmer seinen Verbrauch/seine Erzeugung aktuell anpassen kann, d.h. über welches Änderungspotenzial er verfügt.

Das vorliegende Beispiel bezieht sich auf ein virtuelles Modellgebiet. In dem Modellgebiet des oben skizzierten Beispiels tritt nun ein Mehrverbrauch (+14 W) auf, der ausgeglichen werden soll. Dies wird vorliegend als Ungleichgewicht bezeichnet. Der Teilnehmer M1 überprüft, ob er das Ungleichgewicht reduzieren kann, ohne zu übersteuern. Da er dies nicht kann, meldet er in Schritt 2 an seinen rechten Nachbarn M2, dass er keine Laständerung durchgeführt hat bzw. vornehmen wird. Teilnehmer M2 kann durch eine Laständerung das Ungleichgewicht reduzieren und meldet dies ebenfalls an seinen rechten Nachbarn M3 (Schritt 3). Zusätzlich aktualisiert Teilnehmer M2 die Informationen über seine Freiheitsgrade. In Schritt 4 muss schließlich Teilnehmer M3 seine Leistung anpassen, um das verbleibende Ungleichgewicht auszugleichen, und anschließend die Informationen über seine Freiheitsgrade aktualisieren. Würde im Modellgebiet zu viel Energie produziert, würde in der Gruppenliste von rechts nach links mit dem Ausgleich begonnen.

Muss ein Mitglied der Elitären Gruppe ersetzt werden, weil es nicht mehr in der Lage ist, eine Laständerung vorzunehmen (Änderungspotenzial derzeit ausgeschöpft), muss ein entsprechender Nachfolger aus dem Pool gefunden werden. Dazu liefern Gruppenmitglieder Informationen über eine vorgegebene Anzahl von Nachbarn, d.h. bekannten Systemteilnehmer außerhalb der Gruppe, die eine Laständerung vornehmen können, an ein ausgewähltes Mitglied der Gruppe, welches dann die neuen Mitglieder nach Maßgabe geeigneter Software-Algorithmen bestimmt. Welches Mitglied der Elitären Gruppe die Auswahl durchführt, kann frei gewählt werden. Es werden bei der Auswahl solche Nachbarn bevorzugt, die eine Laständerung durchführen können, indem sie ein Gerät oder eine Anlage abschalten, wie bereits angesprochen. Es müssen in allen Nachbarschaften insgesamt genug geeignete Teilnehmer vorhanden sein, um die Gruppenmitglieder ersetzen zu können. Auch aus diesem Grund ist die Teilnehmerzahl im Pool vorzugsweise deutlich größer als die Zahl der Gruppenmitglieder.

Die Elitäre Gruppe hat einen Überblick über die Nachbarschaft jedes ihrer Mitglieder, welche vorzugsweise datentechnisch erfasst und gespeichert werden. Erhöhen beispielsweise bei einer großen Abweichung viele Teilnehmer ihren Verbrauch, die danach keine Mitglieder der Elitären Gruppe mehr sind, d.h. aufgrund erschöpfter Freiheitsgrade aus der Gruppe ausgeschieden sind, so befinden sie sich anschließend mit hoher Wahrscheinlichkeit noch in der Nachbarschaft der Gruppenmitglieder und können - zu einem späteren Zeitpunkt, den sie vorzugsweise im Zuge der Kommunikation mitteilen (z.B. bei Erreichen einer vorbestimmten (Kühl-)Temperatur im Falle eines Kühlschranks) - problemlos wieder abgeschaltet werden. Da Teilnehmer bevorzugt in die Elitäre Gruppe aufgenommen werden, wenn sie Geräte abschalten, werden seltener zusätzliche Geräte betrieben, was einer Sättigung des Systems entgegenwirkt.

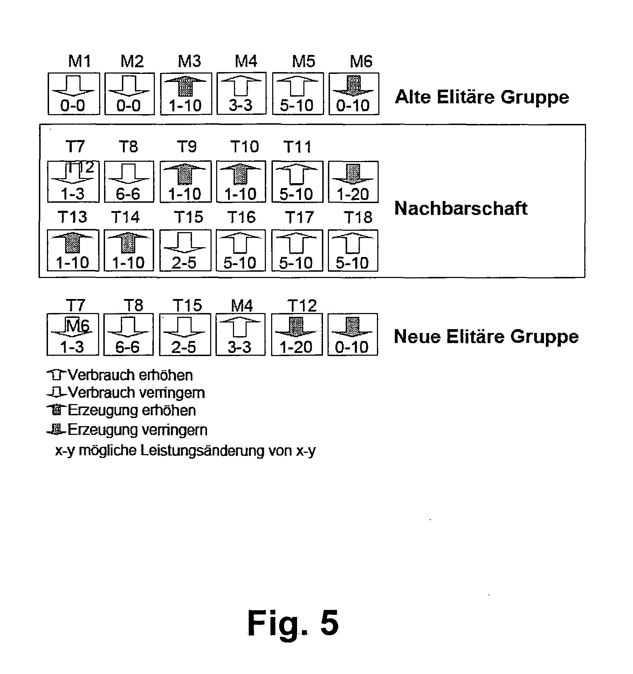

In Fig. 5 ist das entsprechende Schema dargestellt. Ausgehend von der aktuellen Elitären Gruppe wird die Nachbarschaft (bestehend aus kommunikationstechnisch erfassten weiteren Systemteilnehmern) bestimmt. Für die neue Elitäre Gruppe kann aus den Teilnehmern der bisherigen Gruppe oder den Nachbarn ausgewählt werden. In der alten Elitären Gruppe in Fig. 5 müssen auf jeden Fall die Teilnehmer M1 und M2 ausgetauscht werden, da sie ihre Leistung nicht mehr anpassen können (x = y = 0). Die Teilnehmer M3, M4 und M5 sollten nach Möglichkeit ausgetauscht werden, da sie für Leistungsänderungen zusätzlichen Geräte oder Anlagen betreiben würden. Diese Teilnehmer sind an dem nach oben zeigenden Pfeil erkennbar. Da insgesamt genug Teilnehmer vorhanden sind, die ihren Verbrauch senken können (siehe Nachbarschaft), werden die Gruppenmitglieder M1, M2 und M3 durch die Teilnehmer T7, T8 und T15 ersetzt. Es gibt dabei keine Priorisierung unter den neuen Teilnehmern. Sie können in beliebiger Reihenfolge der Gruppe hinzugefügt werden. Da nicht ausreichend viele Teilnehmer vorhanden sind, die ihre Stromerzeugung verringern können, werden die Teilnehmer M4 und M6 beibehalten und nur Teilnehmer M5 durch Teilnehmer T12 ersetzt.

Wenn die Abweichungen sehr groß sind, und die Elitäre Gruppe diese in der Summe nicht mehr selbst ausgleichen kann, muss die Elitäre Gruppe die notwendige Optimierung durchführen, um eine passende Deckung durch den Pool zu initiieren. Bisher musste ein zentraler Betreiber diese Optimierung übernehmen, um den Pool zu steuern. Im Rahmen der vorliegenden Erfindung kann es dagegen ausreichen, wenn jedes Mitglied der Elitären Gruppe nur einen Teil der Abweichung selbst und/oder über den Pool ausgleicht. Die abzudeckende Leistung wird auf alle Mitglieder der Gruppe verteilt, und alle Gruppenmitglieder versuchen, unabhängig voneinander eine passende Deckung im Pool zu finden. Je nach Gruppengröße kann dadurch das resultierende Optimierungsproblem deutlich reduziert werden, was an sich jedoch nicht Teil der vorliegenden Erfindung ist.

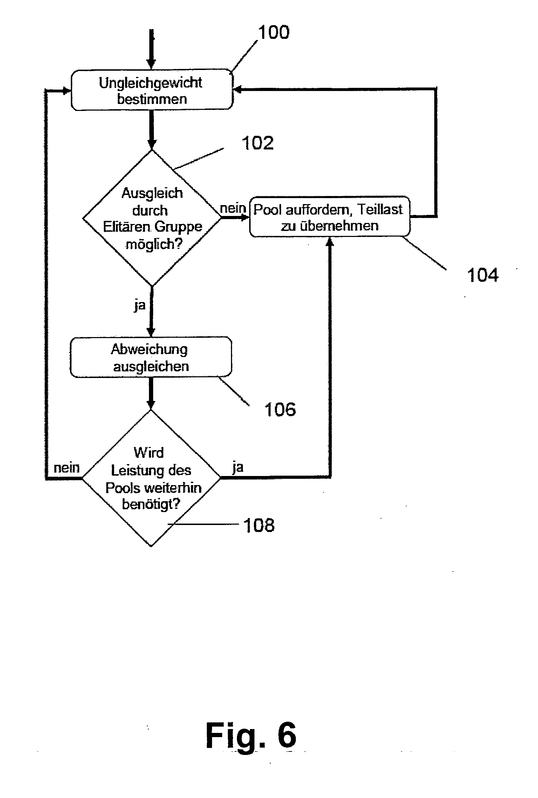

In Fig. 6 ist das allgemeine Vorgehen dargestellt, wie es im Rahmen der vorliegenden Erfindung realisiert sein kann. Zunächst wird in Schritt 100 das Ungleichgewicht der Last bzw. Erzeugung bestimmt. Immer, wenn die entsprechende Abweichung zu groß für die Elitäre Gruppe ist ("nein" in der Abfrage gemäß Schritt 102), fordert diese vom Pool zusätzliche Kapazitäten an, wie bereits erläutert (Schritt 104). Diese Leistung kann nicht nur einmal, sondern beliebig oft und zu beliebigen Zeiten angefordert werden. Dies erlaubt es, die Grö-βe der Elitären Gruppe klein zu halten und damit den zusätzlichen Kommunikationsaufwand zu reduzieren. Da aufgrund der von den Systemteilnehmer kommunizierten Informationen bekannt ist, ab wann die angeforderte Leistung nicht mehr zur Verfügung steht, kann der Pool im Vorfeld erneut aufgefordert werden, Lasten zu verschieben (Schritte 106 und 108). Je größer die Elitäre Gruppe ist, desto mehr Abweichungen können allerdings auch ohne den Pool ausgeglichen werden.

Durch das Verfahren kann auf zentrale Steuerungskomponenten praktisch vollständig verzichtet werden. Es können auch gleichzeitig mehrere unabhängige Elitäre Gruppen eingesetzt werden, was dazu führt, dass das Verfahren beliebig skaliert (vgl. Fig. 3). Zusätzlich ist das Gesamtverfahren robust gegen Störungen und Angriffe von außen.

In mehrphasigen Stromnetzen, wie in Deutschland, kann es erforderlich sein, für jede Phase einen eigenen Pool und eigene Elitäre Gruppen vorzusehen, um alle Lastflüsse berücksichtigen zu können. Geräte oder dezentrale Anlagen die mehrphasig angeschlossen sind, sind dann gleichzeitig Teilnehmer in mehreren Pools. Alternativ kann auch bei der Optimierung die Phase an der die Teilnehmer angeschlossen sind berücksichtigt werden.

Selbstverständlich müssen im Rahmen der Erfindung nicht alle Verbraucher oder Erzeuger im System an dem Pool oder gar der Elitären Gruppe teilnehmen. Das erfindungsgemäße Verfahren bzw. die erfindungsgemäße Vorrichtung lassen sich auch im Zuge der im Aufbau befindlichen Elektromobilitätssysteme prob.lemlos einsetzen.

## Patentansprüche

1. Verfahren zum Last- und Erzeugungsmanagement in einem elektrischen Energiesystem, zu welchem Systemteilnehmer (3.1-3.8, 4; 3', 4', 3", 4") in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems zu verändern,
**dadurch gekennzeichnet, dass**
- für ein dezentrales Last- und Erzeugungsmanagement wenigstens eine Gruppe (EG; EG1-EG3) von Systemteilnehmern (3', 4') innerhalb des Energiesystems gebildet wird,
- zunächst nur Mitglieder der Gruppe durch Ausnutzung ihrer eigenen Änderungspotenziale soweit möglich eine vorgegebene Änderung des Last- und Erzeugungszustands des Energiesystems bewirken, und
- anschließend eine ggf. noch erforderliche Reständerung des Last-und Erzeugungszustands des Energiesystems zum Erreichen der vorgegebenen Änderung des Last- und Erzeugungszustands des Energiesystems durch Ausnutzung der Änderungspotenziale einer Anzahl weiterer Systemteilnehmer (3", 4") außerhalb der Gruppe bewirkt wird.

2. Verfahren nach Anspruch 1, **dadurch gekennzeichnet, dass** die Anzahl der Mitglieder (3', 4') der Gruppe (EG; EG1-EG3) deutlich kleiner ist als die Anzahl der Systemteilnehmer, vorzugsweise um einen Faktor der Größenordnung 10, höchst vorzugsweise um einen Faktor der Größenordnung 100 oder größer.

3. Verfahren nach Anspruch 1 oder 2, **dadurch gekennzeichnet, dass** ausschließlich Mitglieder (3', 4') der Gruppe (EG; EG1-EG3) berechtigt sind, den Last- und Erzeugungszustand des Energiesystems durch Ausnutzung ihrer Änderungspotenziale zu verändern, ohne sich mit anderen Systemteilnehmern (3", 4") außerhalb der Gruppe abzustimmen.

4. Verfahren nach mindestens einem der vorhergehenden Ansprüche, **dadurch gekennzeichnet, dass** in die Gruppe (EG; EG1-EG3) nur solche Systemteilnehmer (3', 4') aufgenommen werden oder nur solche Systemteilnehmer (3', 4') in der Gruppe verbleiben, die über aktuell nutzbare Änderungspotenziale verfügen.

5. Verfahren nach mindestens einem der vorhergehenden Ansprüche, **dadurch gekennzeichnet, dass** in die Gruppe (EG; EG1-EG3) bevorzugt solche Systemteilnehmer (3', 4') aufgenommen werden, deren Änderungspotenziale eine Verringerung des Stromverbrauchs und/oder der Stromerzeugung erlauben.

6. Verfahren nach mindestens einem der vorhergehenden Ansprüche, **dadurch gekennzeichnet, dass** die Mitglieder (3', 4') der Gruppe (EG; EG1-EG3) einzeln nacheinander versuchen, durch Ausnutzung ihrer eigenen Änderungspotenziale soweit möglich eine vorgegebene Änderung des Last- und Erzeugungszustands des Energiesystems bewirken, wobei vorzugsweise eine Änderung des Last- und Erzeugungszustands des Energiesystems über die vorgegebene Änderung des Last- und Erzeugungszustands des Energiesystems hinaus vermieden wird und wobei vorzugsweise die Mitglieder der Gruppe ihren jeweiligen geplanten Änderungen untereinander kommunizieren und diese anschließend gemeinsam realisieren.

7. Verfahren nach mindestens einem der vorhergehenden Ansprüche, **dadurch gekennzeichnet, dass** die Mitglieder (3', 4') der Gruppe (EG; EG1-EG3) steuerungstechnisch in wenigstens einer Liste angeordnet werden, welche sukzessive zum Bewirken der vorgegebenen Änderung des Last-und Erzeugungszustands des Energiesystems abgearbeitet wird, wobei vorzugsweise Systemteilnehmer mit Änderungspotenzialen zur Senkung des Stromverbrauchs an einem ersten Ende der Liste und Systemteilnehmer mit Änderungspotenzialen zur Senkung der Stromerzeugung an einem zweiten Ende der Liste angeordnet sind, und wobei die Liste in Abhängigkeit von der Änderungsvorgabe von dem ersten Ende oder von dem zweiten Ende her abgearbeitet wird.

8. Verfahren nach mindestens einem der vorhergehenden Ansprüche, **dadurch gekennzeichnet, dass** ein Mitglied (3', 4') der Gruppe (EG; EG1-EG3), welches nicht über aktuell nutzbare Änderungspotenziale verfügt, aus der Gruppe ausscheidet.

9. Verfahren nach zumindest Anspruch 8, **dadurch gekennzeichnet, dass** das ausgeschiedene Mitglied (3', 4') der Gruppe (EG; EG1-EG3) durch einen anderen Systemteilnehmer (3", 4") ersetzt wird, welcher über aktuell nutzbare Änderungspotenziale verfügt.

10. Verfahren nach zumindest Anspruch 9, **dadurch gekennzeichnet, dass** zum Ersetzen des ausgeschiedenen Mitglieds wenigstens ein Mitglied (3', 4') der Gruppe (EG; EG1-EG3) Informationen betreffend eine vorgegebene Anzahl weiterer Systemteilnehmer (3", 4"), welche über aktuell nutzbare Änderungspotenziale verfügen, an ein vorbestimmtes Mitglied der Gruppe sendet, welches anhand der Informationen ein neues Mitglied der Gruppe bestimmt.

11. Verfahren nach mindestens einem der vorhergehenden Ansprüche, **dadurch gekennzeichnet, dass** in die Gruppe (EG; EG1-EG3) nur solche Systemteilnehmer (3', 4') aufgenommen werden oder dass nur solche Systemteilnehmer in der Gruppe verbleiben, deren aktuell nutzbare Änderungspotenziale innerhalb einer vorgegebenen Zeit, t, verfügbar sind, wobei t vorzugsweise im Sekunden- oder Minutenbereich liegt, höchst vorzugsweise zwischen 1 Minute und 15 Minuten.

12. Verfahren nach mindestens einem der vorhergehenden Ansprüche, **dadurch gekennzeichnet, dass** zum Bewirken einer noch erforderlichen Reständerung des Last- und Erzeugungszustands des Energiesystems wenigstens ein Mitglied (3', 4') der Gruppe (EG; EG1-EG3) eine Anzahl weiterer Systemteilnehmer (3", 4") außerhalb der Gruppe zur Ausnutzung ihrer jeweiligen Änderungspotenziale auffordert.

13. Verfahren nach zumindest Anspruch 12, **dadurch gekennzeichnet, dass** eine Mehrzahl von Mitgliedern (3', 4') der Gruppe (EG; EG1-EG3) jeweils eine Anzahl weiterer Systemteilnehmer (3", 4") außerhalb der Gruppe zur Ausnutzung ihrer jeweiligen Änderungspotenziale auffordert, wobei jedes dieser Gruppenmitglieder für das Bewirken nur eines Teils der noch erforderlichen Reständerung des Last- und Erzeugungszustands des Energiesystems verantwortlich ist.

14. Verwendung des Verfahrens nach einem der vorhergehenden Ansprüche auf der Ebene von Bilanzkreisen (BK) oder Regelzonen des elektrischen Energiesystems, wobei der betreffende Bilanzkreisverantwortliche (BKV) oder Regelzonenverantwortliche wenigstens ein Mitglied (3', 4') der Gruppe (EG; EG1-EG3) über eine gewünschte Änderung des Stromverbrauchszustands oder Stromerzeugungszustands informiert, um eine Kompensation durch die Systemteilnehmer zu bewirken.

15. Vorrichtung für das Last- und Erzeugungsmanagement in einem elektrischen Energiesystem, zu welchem Systemteilnehmer (3.1-3.8, 4; 3', 4', 3", 4") in Form einer Anzahl von Stromverbrauchern und/oder einer Anzahl von Stromerzeugern leitungstechnisch zusammengeschlossen sind, wobei die Systemteilnehmer selbst oder durch zusätzliche Steuerungskomponenten kommunikationstechnisch verbunden und dafür eingerichtet sind, bei Bedarf zumindest einen weiteren Systemteilnehmer über ein Änderungspotenzial ihres Stromverbrauchszustands oder Stromerzeugungszustands zu informieren, um durch Ausnutzung des Änderungspotenzials wenigstens eines Systemteilnehmers einen Last- und Erzeugungszustand des Energiesystems gemäß dem Verfahren nach einem der Ansprüche 1 bis 13 zu verändern,
**dadurch gekennzeichnet, dass**
- die Systemteilnehmer (3.1-3.8, 4; 3', 4', 3", 4") selbst oder über zusätzliche Steuerungskomponenten untereinander über ein Rechnernetz (5), vorzugsweise das Internet, kommunikationstechnisch verbunden sind,
- eine Anzahl von Systemteilnehmern jeweils über einen Router (6.1-6.3), vorzugsweise einen Internet- oder WLAN-Router (6.1, 6.3) oder einen Router (6.2) in Verbindung mit einem Powerline-Kommunikationsnetz (7), an das Rechnernetz (5) angeschlossen ist, und
- die Systemteilnehmer selbst, die genannten Router, oder zusätzliche Steuerungskomponenten zur Durchführung des Verfahrens eingerichtet sind, vorzugsweise durch Installation einer hierfür erforderlichen Software (8.1-8.3).
